# DEMANDE DE BREVET EUROPEEN

(11) **EP 2 602 939 A1**
(43) Date de publication de la demande: **12.06.2013**
(21) Numéro de dépôt: 12290424.6
(22) Date de dépôt: 03.12.2012
(51) Int. Cl.: H04B 1/06, H01Q 23/00

(54) **Système antennaire implantable au sein d'une structure métallique utilisé pour la réception radio, en Audio Numérique "DAB/DAB+/DMB", en Modulation de Fréquence "FM" et/ou pour la géolocalisation "GPS".**

(30) Priorité: 08.12.2011 FR 1103750
(71) Demandeur: Fiamm France, 78410 Aubergenville (FR)
(72) Inventeur: Bachelet, Didier, 78270 Blaru (FR)

(57) **Abrégé**

Dispositif d'un système antennaire qui est implanté au sein même de l'antenne et assure la transmission haut débit des signaux radio - électriques.

A ce jour, nous pouvons constater que des systèmes d'amplifications et d'adaptations d'impédances intelligents sont proposés. ne permettent pas de transmettre des signaux en haut débit du fait des problèmes techniques que cela engendre, particulièrement en terme de compatibilité électromagnétique (ou « CEM ») et des coûts importants de réalisation.

Dans ce nouveau système antennaire nous mettons le système de Modulation/Démodulation (11) juste après « l'amplification - adaptation d'impédance » et cet ensemble « Adaptation - Amplification Modulation/Démodulation » est implanté au sein même de l'antenne qui est elle même fixée sur une structure métallique.

L'invention décrite précédemment permet de diminuer les coûts pour les constructeurs tout en apportant de nouveaux services.

## Description

La présente invention concerne un nouveau système antennaire qui assure la transmission haut débit de signaux radio - électriques. Ce nouveau système est implanté au sein même de l'antenne. Ce système antennaire est destiné à être monté au sein d'une structure métallique qui peut avoir une cavité et utilise la réception radio et/ou de géolocalisation. Il peut s'agir de transports routiers, aériens, maritimes ou fluviaux *(comme par exemple les voitures, les motocyclettes, les camions, les cars, les véhicules utilitaires, les engins agricoles, les trains, les tramways, les avions, les hélicoptères, les bateaux,... cette liste ne peut être exhaustive).*

Dans notre environnement quotidien nous observons de plus en plus une forte évolution des services radio embarqués. Cette demande des utilisateurs s'accompagne par un besoin de transmission et/ou de réception simultanée de données. Elle nécessite une augmentation accrue des performances des terminaux mobiles *(Antenne* + *Electronique)* pour assurer des débits de transferts raisonnables.

A titre d'exemple nous expliquons dans ce qui suit la situation dans le secteur automobile, mais l'invention n'est pas limitée à ce type de secteur industriel. A ce jour, nous pouvons constater que des systèmes d'amplifications et d'adaptations d'impédances intelligents sont proposés.

Par exemple le brevet : « EP 1983609A1 » propose une antenne multi - bandes intégrée sur un support diélectrique incluant l'adaptation d'impédance et l'amplification.

Cette idée, bien qu'intéressante dans la réduction de l'encombrement et du nombre d'aériens *(typiquement dans ce système, on inclut plusieurs applications dans un seul boîtier)* ne permet pas de transmettre des signaux en haut débit du fait des problèmes techniques que cela engendre, particulièrement en terme de compatibilité électromagnétique *(ou « CEM »)* et des coûts importants de réalisation.

La présente invention a pour objet de remédier aux inconvénients susmentionnés. Pour ce faire et afin de répondre au besoin de transmission haut débit, quelques types de problèmes majeurs sont à prendre en considération :
- Respecter les normes établies pour les émissions / réceptions d'ondes électromagnétiques,
- Réduire et/ou limiter l'encombrement des pièces implantées dans le véhicule,
- Proposer des coûts des plus compétitifs envers les constructeurs,... cette liste n'est pas exhaustive.

Le but de la présente invention est de résoudre les problèmes cités précédemment et a pour objet de proposer (ci-dessous) un moyen pour transmettre l'information envers un terminal *(récepteur - radio)* par le biais d'une structure métallique pouvant être fermée ou semi-fermée.

De ce fait, la présente invention consiste, à intégrer la modulation/démodulation et la numérisation des signaux à l'intérieur du système antennaire. Le signal utile ainsi généré peut être transporté par des bus haut débit tels qu'un câble « USB », un câble « Ethernet » ou une transmission sans fil (selon la norme IEEE 802.XX ) ...

La présente invention est constituée d'une antenne, d'une adaptation d'impédance, d'une amplification, d'un modulateur/démodulateur et d'un module de transmission de l'information numérique, adapté au protocole utilisé.

Dans notre description, nous allons prendre l'exemple d'une réception « FM/DAB/DAB+/DMB » sur un véhicule automobile tout en sachant que l'invention peut couvrir d'autres applications et d'autres types de porteurs métalliques.

Il est à noter pour information les définitions suivantes :
La **diffusion Audio Numérique** *(« DAB » pour **D**igital* **Audio** ***B**roadcasting)* est un système de radiodiffusion numérique standardisé développé par le projet européen « Eureka 147 » regroupant des diffuseurs, constructeurs, centres de recherches et opérateurs.
La **radio FM** est un système de radiodiffusion de programmes radiophoniques en **modulation de fréquence *(« FM* »** *pour **Frequency modulation**)* dans la gamme des très hautes fréquences *(« VHF » pour* Very High Frequency) destinée à être reçue directement par le public en général et s'applique à la fois à la réception individuelle et à la réception communautaire. Dans la plupart des pays, c'est plus précisément la bande 87,5 - 108 MHz *(VHF - bande II)* qui est utilisée. Du fait de son utilisation par la radio FM, cette bande est souvent appelée « bande FM » dans le grand public.
**Le DAB+ :** le DAB permet de transporter des flux audio au format HE-AAC V2 HE, le nom commercial de ce complément est **« DAB+ ».** Ce format de compression audio offre un bien meilleur rapport qualité/compression que le MPEG-1/2 Layer II choisi à l'origine pour le DAB, et permet ainsi d'offrir un plus grand choix de radios et/ou une meilleure qualité d'écoute.
Le système « D**MB »** (***D**igital **M**ultimedia **B**roadcasting, - Diffusion Multimédia Numérique*) est un système de diffusion numérique terrestre basé sur le « DAB » créé en Corée du Sud et développé et standardisé dans ce même pays. Les normes sur lesquelles il est construit permettent la réception optimisées des signaux télévisuels sur tout type d'appareil multimédia mobile, disposant d'un tuner compatible.

### Description de l'antenne :

Elle peut être constituée :
   - soit d'un enroulement de fil conducteur autour d'une fibre de verre. Le pas de l'enroulement ainsi que le diamètre de la fibre de verre sont optimisés de façon à recevoir des signaux FM/DAB *(voir les définitions),*
   - soit d'une forme géométrique quelconque imprimée sur un substrat diélectrique comme dans le cas du brevet cité précédemment *(*EP 1983609A1*).*
   Sur d'autres exemples, l'antenne peut être sérigraphiée sur l'une des vitres du véhicule.

### Description de l'adaptation d'impédance et l'amplification :

Cette étape permet d'optimiser le niveau de signal reçu et/ou transmis par l'antenne et de l'amplifier (tout en maîtrisant le facteur de bruit). Elle est essentiellement constituée de composants électroniques de types : Résistance, électronique, Inductance, Condensateur, Transistor,... cette liste ne peut être exhaustive.

### Description de la modulation/démodulation et la numérisation

Cette étape se fait classiquement au sein du terminal émetteur/récepteur *(par exemple l'auto - radio).* Dans la présente invention nous mettons le système de démodulation juste après l'amplification/adaptation d'impédance. Dans ce nouveau système l'ensemble « Adaptation - Amplification - Modulation/Démodulation » est implanté au sein même de l'antenne qui est elle même fixée sur une structure métallique, ceci dans de multiples buts :
- Utiliser un facteur d'amplification moindre *(plus de pertes liées* au *câble coaxial)* du fait de la suppression des câbles,
- Numériser le signal utile en bande de base afin qu'il soit transmissible sur des bus haut débit,
- S'affranchir des problèmes de compatibilité électromagnétique « CEM ». En effet, les bus haut débit filaires actuels fonctionnent en mode différentiel permettant de s'affranchir des perturbations « CEM » issues du mode commun. Les systèmes de transmission sans-fil modernes, quant à eux, intègrent des algorithmes de cryptage ou de transmission robustes (étalement de spectre, évasion de fréquence,...) permettant de lutter efficacement contre les brouilleurs.

L'invention va maintenant être décrite plus en détail dans les illustrations, dans lesquelles :

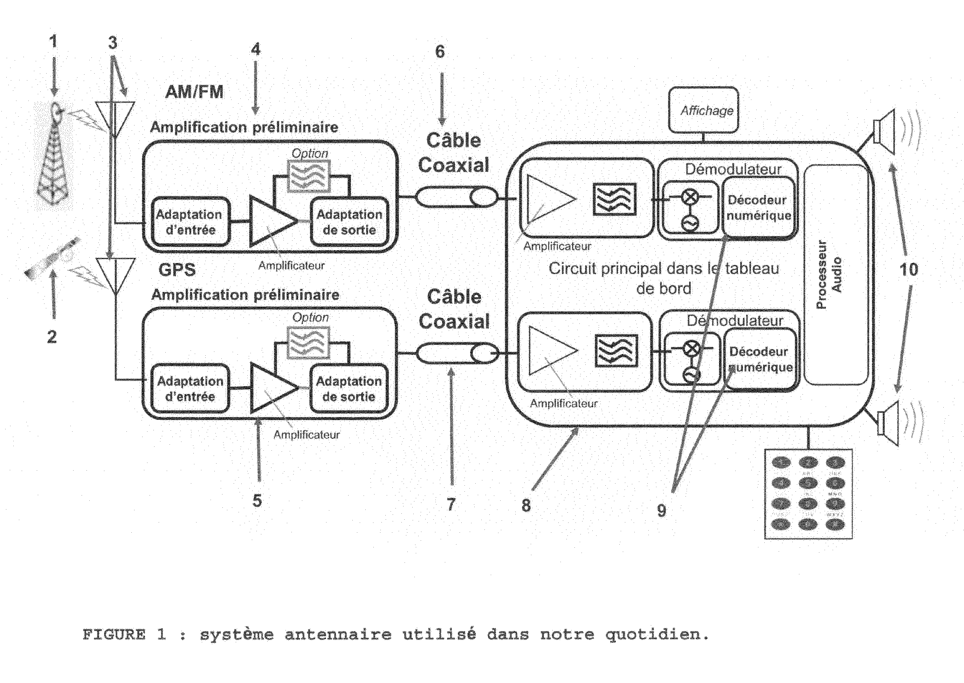

La figure 1 : représente de manière schématisée un système antennaire utilisé dans notre quotidien,

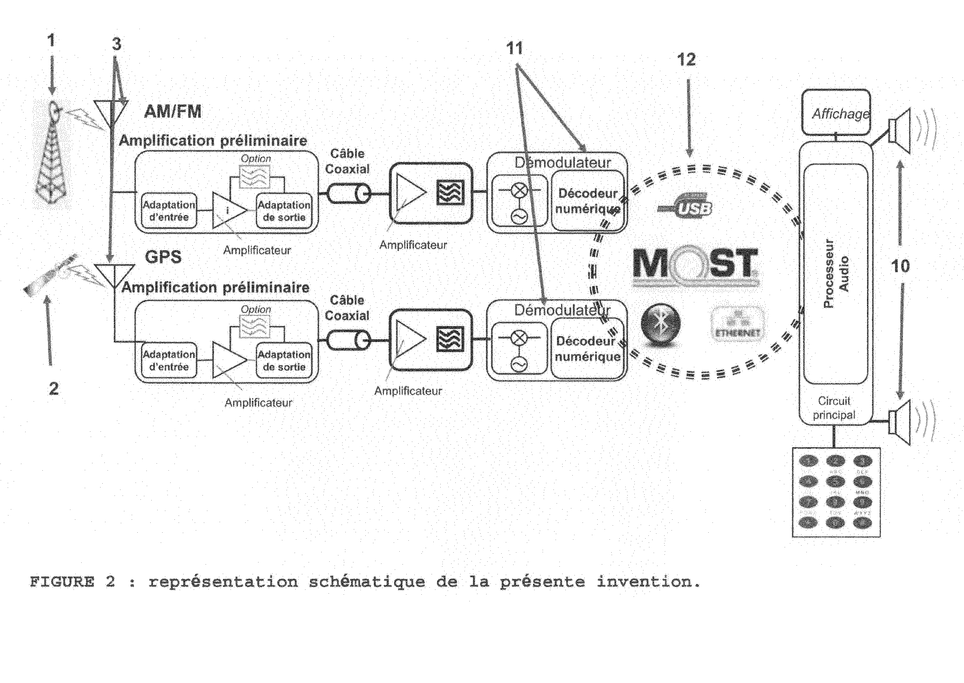

La figure 2 : représente de manière schématique l'invention qui concerne un nouveau système antennaire. Comme explicité dans le premier chapitre l'application peut être utilisée dans les domaines des transports routiers, aériens, maritimes, agricoles ou fluviaux (liste non exhaustive),
   Repère 1 : **Diffusion Audio Numérique** *(« **DAB** » pour **D**igital* **Audio** ***B**roadcasting),* radiodiffusion de programmes radiophoniques en **modulation de fréquence** *(« **FM »** pour **Frequency modulation),*** diffusion de programmes radio sur un multiplexe DMB et DAB+,
   Repère 2 : Les satellites « GPS » *(Global Positioning System)* émettent plusieurs signaux codés, à destination des secteurs civile et/ou militaire,
   Repère 3 : Réception des signaux par le système antennaire,
   Repère 4 : Adaptation & Amplification des signaux « DAB/DAB+/DMB et FM »
   Repère 5 : Calculateur du récepteur qui permet de traiter les informations pour indiquer à l'utilisateur sa géolocalisation,
   Repère 6 : Câble coaxial qui permet dans notre quotidien d'effectuer la transmission des données « DAB/DAB+/DMB et FM » envers le terminal *(récepteur auto radio),*
   Repère 7 : Câble coaxial qui permet dans notre quotidien d'effectuer la transmission des données « GPS » envers le système de navigation,
   Repère 8 : Processeur de traitement « DSP » *(Digital Signal Processor* ou *processeur* de *signal* numérique) dont l'application principale est le traitement du signal *(filtrage, extraction des signaux,...)*
   Repère 9 : Les démodulateurs sont intégrés au sein du processeur de traitement dans le système actuellement utilisé,
   Repère 10 : Haut-parleurs ou Transducteurs électromécaniques destinés à produire des sons à partir d'un signal électrique,
   Repère 11 : Principe de l'invention, les démodulateurs sont intégrés dans le système antennaire ce qui permet de supprimer les câbles coaxiaux,
   Repère 12 : Principe de l'invention, le protocole utilisé permet la transmission des données du système antennaire envers le terminal *(récepteur auto - radio).* Il est à noter que la transmission des données est en haut débit,

Le système de transmission peut être intégré dans un environnement réseau. En effet, dans un but de réduction du nombre de câbles au sein d'un système mobile, il est possible de pouvoir multiplexer les informations numériques en provenance du système antennaire avec d'autres systèmes au sein du véhicule.

## Revendications

1. Système antennaire implantable au sein d'une structure métallique utilisé pour la réception radio en Audio Numérique « DAB/DAB+/DMB » (1), en Modulation de Fréquence « FM » (1) et/ou pour la géolocalisation « GPS » (2) **caractérisé en ce que :**
- Le système antennaire réceptionne (3) ; la Diffusion Audio Numérique « DAB/DAB+/DMB » (1), et/ou la Modulation de Fréquence « FM » (1), et/ou la réception codée de géolocalisation « GPS » (2),
- Les démodulateurs (11) sont intégrés dans le système antennaire,
- La transmission des données du système antennaire envers « le terminal - récepteur auto - radio » (12) est en haut débit,
- les Haut-parleurs ou transducteurs électromécaniques (10) produisent le son à partir du signal électrique reçu.

2. Système antennaire selon la revendication 1 **caractérisé en ce que** le système de Modulation/Démodulation (11) est situé juste après « l'amplification - adaptation d'impédance ».

3. Système antennaire selon la revendication 1 **caractérisé en ce que** l' ensemble « Adaptation - Amplification - Modulation/Démodulation » (11) est implanté au sein même de l'antenne.

4. Système antennaire selon la revendication 1 **caractérisé en ce que** la numérisation des signaux est intégrée dans le système antennaire.

5. Système antennaire selon les revendications 2, 3 et 4 **caractérisé en ce que** le signal utile ainsi généré peut être transporté par des bus haut débit ou une transmission sans fil (12).
